# EUROPÄISCHE PATENTSCHRIFT

(11) **EP 1 359 393 B1**
(45) Veröffentlichungstag und Bekanntmachung des Hinweises auf die Patenterteilung: **26.12.2012**
(21) Anmeldenummer: 03007013.0
(22) Anmeldetag: 27.03.2003
(51) Int. Cl.: G01C 21/36

(54) **Kraftfahrzeugnavigationssystem und Verfahren zur Auswahl einer Bezeichnung**
Motor vehicle navigation system and method for selecting a designation
Système de navigation pour véhicule automobile et procédé de sélectionner une désignation

(30) Priorität: 30.04.2002 DE 10219499
(43) Veröffentlichungstag der Anmeldung: 05.11.2003
(73) Patentinhaber: Continental Automotive GmbH, 30165 Hannover (DE)
(72) Erfinder: Hofman, Peter, 35392 Giessen (DE); van Roekel, Jauke, 35641 Laufdorf (DE)

(56) Entgegenhaltungen:
- EP-A- 0 366 132
- EP-A- 0 789 224
- EP-A- 1 061 714
- WO-A-03/067193
- DE-A1- 19 859 078
- DE-A1- 19 929 425

## Beschreibung

Die Erfindung betrifft ein Kraftfahrzeugnavigationssystem mit einer Recheneinheit, die mit einer Eingabeeinheit und einer Anzeigeeinheit sowie einem Speicherelement, das eine Datenbank mit Orts- und/oder Straßenbezeichnungen enthält, verbunden ist, wobei die Anzeigeeinheit so angeordnet ist, dass auf ihr sowohl Zeichen zur zeichenweisen Eingabe einer Orts- oder Straßenbezeichnung als auch Auswahlvorschläge für eine Orts- oder Straßenbezeichnung angezeigt werden und die Auswahlvorschläge eine bereits zeichenweise eingegebene Zeichenfolge als Anfangsbestandteil enthalten. Weiterhin betrifft die Erfindung ein Verfahren zur Auswahl einer Bezeichnung aus einer Vielzahl von in einer ersten Datenbank gespeicherten Bezeichnungen.

Ein derartiges Kraftfahrzeugnavigationssystem bzw. Verfahren ist aus der DE-A1-198 59 078, EP-A-0 789 224, EP-A-1 061 714, DE-A1-199 29 425 und WO-A1-03/067193 im Wesentlichen bekannt, wobei die WO-A-03/067193 Stand der Technik gemäß Art. 54 (3) EPÜ ist.

In Kraftfahrzeugnavigationssystemen muß vor Durchführung einer Routenberechnung ein Zielort eingegeben werden. Hierzu sind verschiedene Verfahren bekannt, zu denen beispielsweise die Auswahl eines Zielortes direkt aus einer Landkartendarstellung, die Auswahl eines Zielortes anhand einer Liste oder die buchstabenweise Eingabe eines Zielortes gehören. Aufgrund der besonderen Gegebenheiten im Kraftfahrzeug besteht für die buchstabenweise Eingabe des Fahrziels keine vollständige Schreibmaschinentastatur zur Verfügung. Vielmehr werden auf einer Anzeigeeinheit alphanumerische Zeichen angezeigt, die beispielsweise über einen Drehsteller angewählt und ausgewählt werden können. Um die Eingabe zu beschleunigen, ist es bekannt, nur noch solche alphanumerischen Zeichen zur Eingabe anzubieten, die in Ergänzung der bereits eingegebenen alphanumerischen Zeichen eine Ortsbezeichnung ergeben, die auch im Ortsverzeichnis einer Datenbank abgelegt ist.

Aus der EP 1 120 632 A2 ist es darüber hinaus bekannt, eine bereits eingegebene Zeichenkette mit den abgespeicherten Zielorten zu vergleichen und bei Übereinstimmung der eingegebenen Zeichenkette mit dem Beginn einer abgespeicherten Zieladresse diese auf der Anzeigeeinheit anzuzeigen. Diese Vorgehensweise entspricht weitgehend dem Springen an eine bestimmte Stelle innerhalb einer alphabetisch sortierten Liste aller möglichen Zielorte. Wird die Gesamtheit aller möglichen Zielorte einer Landkartendatei zugrunde gelegt, so ergeben sich nur geringe Vorteile dieses Verfahrens. Deshalb wird in dem genannten Dokument zusätzlich vorgeschlagen, die Suche nur innerhalb eines Speichers mit den zuletzt eingegebenen Navigationszielorten, beispielsweise den letzten 20 Zielen, oder in einem Speicher mit den in einem vorgegebenen zurückliegenden Zeitraum am häufigsten eingegebenen Informationen durchzuführen.

Aufgabe der Erfindung ist es, ein Navigationssystem anzugeben, das eine weiter vereinfachte Auswahlmöglichkeit für Orts- oder Straßenbezeichnungen als Zielangabe gestattet. Eine weitere Aufgabe der Erfindung besteht darin, ein Verfahren zur Auswahl einer Bezeichnung aus einer Vielzahl von in einer ersten Datenbank gespeicherten Bezeichnungen anzugeben, das eine komfortable Auswahl einer abgespeicherten Bezeichnung gestattet.

Die erst genannte Aufgabe wird durch ein Kraftfahrzeugnavigationssystem mit den Merkmalen des Anspruchs 1 gelöst. Im Gegensatz zu den bekannten Verfahren, bei denen nach Eingabe einer bestimmten Zeichenfolge innerhalb einer alphabetischen Liste an die entsprechende Listenstelle gesprungen wird, erfolgt bei dem erfindungsgemäßen Kraftfahrzeugnavigationssystem somit eine bestimmte Auswahl der anzuzeigenden Auswahlvorschläge. Die Auswahl erfolgt derart, dass die bereits eingegebene Zeichenfolge als Anfangsbestandteil der Auswahlvorschläge vorhanden sein muß und darüber hinaus zu jedem noch möglichen Ergänzungszeichen zu der bereits ausgewählten Zeichenfolge genau ein Auswahlvorschlag ausgewählt wird. Dies hat zur Folge, dass sich die Auswahlvorschläge dann in dem auf die bereits eingegebene Zeichenfolge folgenden Zeichen unterscheiden. Dies entspricht prinzipiell dem Sprung an mehrere Stellen innerhalb einer Liste, wodurch die weitere Eingabe oder Auswahl der Orts- oder Straßenbezeichnung deutlich erleichtert wird.

Insbesondere ist vorgesehen, dass wahlweise ein Zeichen oder einer der Auswahlvorschläge auswählbar ist. Entspricht einer der angezeigten Auswahlvorschläge bereits dem Fahrziel des Benutzers, so kann dieser Auswahlvorschlag direkt ausgewählt werden. Anderenfalls kann von dem Benutzer ohne Umschalten des Anzeigemodus ein weiteres Zeichen zur Ergänzung der bereits eingegebenen Zeichenkette und damit zur zeichenweisen Eingabe einer Bezeichnung an- und ausgewählt werden. Somit sind zwei verschiedene Eingabemodi in einer Eingabemaske vereint.

Prinzipiell können die noch auswählbaren Zeichen und die Auswahlvorschläge in beliebiger Weise auf der Ausgabeeinheit angezeigt werden. Eine besonders vorteilhafte Ausgestaltung ergibt sich jedoch, wenn die Auswahlvorschläge zeilenweise alphabetisch angeordnet sind und die auswählbaren Zeichen in einer Spalte innerhalb der zeilenweise angeordneten Auswählvorschläge optisch hervorgehoben dargestellt sind. Hierdurch wird durch eine einzige Darstellung, nämlich die Anzeige der Auswahlvorschläge sowohl die Auswahl eines der Auswahlvorschläge als auch die Auswahl eines weiteren Zeichens ermöglicht. Ein derartiges System ist daher besonders benutzerfreundlich.

Sowohl bei Kraftfahrzeugnavigationssystemen als auch beispielsweise bei Mobiltelefonen ist die Anzeigeeinheit nur zur Anzeige weniger Zeilen ausgeführt. Gerade wenn die bereits eingegebene Zeichenfolge nur wenige oder sogar nur ein Zeichen umfaßt, werden daher noch relativ viele Auswahlvorschläge vorhanden sein, die sich in dem danach folgenden Zeichen unterscheiden. Bei den genannten kleinen Anzeigeeinheiten werden die Auswahlvorschläge daher nicht alle gleichzeitig angezeigt werden können. Daher ist in einer weiteren Ausgestaltung der Erfindung vorgesehen, dass die Darstellung der Auswahlvorschläge scrollbar ist. Hierdurch können auch bei einer kleinen Anzeigeeinheit die Vorteile der Erfindung genutzt werden.

In einer besonderen Ausführungsform ist vorgesehen, dass mehrere Datenbanken mit Bezeichnungen vorhanden sind, wobei hinsichtlich der Auswahl der Bezeichnungen eine Hierarchie der Datenbanken festgelegt ist. Beispielsweise kann das Kraftfahrzeugnavigationssystem neben einer ersten Datenbank, die die Ortsbezeichnungen aller auf einer Landkartendatei vorhandenen Orte enthält, eine oder weitere Datenbanken mit einer geringeren Datenmenge enthalten. Bei den weiteren Datenbanken kann es sich beispielsweise um eine Datenbank mit den zuletzt eingegebenen Fahrzielen oder ein persönliches oder geschäftliches Adressbuch handeln. Durch Festlegung einer Hierarchie der Datenbanken kann somit erreicht werden, dass ein Auswahlvorschlag beispielsweise zunächst in der Datenbank mit den letzten Fahrzielen, die z.B. auf 20 Einträge begrenzt ist, gesucht wird. Erst wenn dort kein entsprechender Eintrag vorhanden ist, kann eine weitere Suche in einem Adressbuch oder schließlich auch in der Datenbank aller möglichen Fahrziele innerhalb der abgespeicherten Landkartendatei erfolgen. Hierdurch ergibt sich eine höhere Wahrscheinlichkeit, dass einer der angezeigten Auswahlvorschläge mit dem gewünschten Fahrziel bereits frühzeitig nach Eingabe weniger Zeichen übereinstimmt.

Ein erfindungsgemäßes Verfahren zur Auswahl einer Bezeichnung aus einer Vielzahl von in einer ersten Datenbank gespeicherten Bezeichnungen weist die folgenden Verfahrensschritte auf:
- Anzeigen eines Satzes von alphanumerischen Zeichen auf einer Anzeigeeinheit,
- Auswahl eines Zeichens als Bestandteil einer zu generierenden Zeichenfolge,
- Vergleichen des ausgewählten Zeichens oder der generierten Zeichenfolge mit den in der ersten Datenbank gespeicherten Bezeichnungen, um einen neuen Satz von Zeichen festzulegen, wobei der neue Satz von Zeichen nur diejenigen Zeichen enthält, die in Ergänzung des ausgewählten Zeichens oder der generierten Zeichenfolge eine neue Zeichenfolge ergeben, die Anfangsbestandteil mindestens einer der auf der ersten Datenbank abgespeicherten Bezeichnungen ist,
- Anzeigen zumindest eines Teils der Zeichen des neuen Satzes von Zeichen auf der Anzeigeeinheit zur Auswahl,
- Auswählen von Bezeichnungen aus der ersten oder einer weiteren Datenbank als Auswahlvorschläge, wobei zu jeder möglichen neuen Zeichenfolge genau ein Auswahlvorschlag ausgewählt wird, der die jeweilige neue Zeichenfolge enthält, auch wenn mehrere der in der Datenbank gespeicherten Bezeichnungen vorhanden sind, die die neue Zeichenfolge enthalten, und
- Anzeigen zumindest einiger der Auswahlvorschläge auf der Anzeigeeinheit zur Auswahl, wobei wahlweise ein Zeichen des neuen Satzes von Zeichen oder einer der Auswahlvorschläge auswählbar ist.

Bei dem erfindungsgemäßen Verfahren wird somit ein Satz von alphanumerischen Zeichen auf einer Anzeigeeinheit angezeigt. Anschließend erfolgt eine Auswahl eines ersten Zeichens als Bestandteil einer zu generierenden Zeichenfolge. Das ausgewählte Zeichen bzw. die bereits generierte Zeichenfolge wird dann mit den in einer Datenbank gespeicherten Bezeichnungen verglichen.

Bei diesem Vergleich wird festgestellt, welche alphanumerischen Zeichen überhaupt noch infrage kommen, um in Ergänzung der bereits generierten Zeichenfolge eine neue Zeichenfolge zu ergeben, wobei die neue Zeichenfolge Anfangsbestandteil mindestens einer auf der Datenbank abgespeicherten Bezeichnung ist. Somit werden solche alphanumerischen Zeichen ausgeschlossen, die in Ergänzung der bereits ausgewählten Zeichenfolge eine neue Zeichenfolge ergeben mit der keine der abgespeicherten Bezeichnungen beginnt. Der neue Zeichensatz mit den noch auswählbaren Zeichen wird auf der Anzeigeeinheit zur weiteren Auswahl angezeigt. Insoweit handelt es sich um ein bekanntes intelligentes Eingabesystem.

Weiterhin werden aus der Datenbank nun Bezeichnungen ausgewählt, die als Auswahlvorschläge angezeigt werden. Die Auswahl der Bezeichnungen zur Anzeige auf der Anzeigeeinheit erfolgt dabei derart, dass zu jeder möglichen neuen Zeichenfolge, die sich aus der bereits generierten Zeichenfolge ergänzt um eines der jeweils noch möglichen Zeichen ergibt, genau ein Auswahlvorschlag ausgewählt wird. Der Benutzer kann nun wahlweise ein neues Zeichen zur Ergänzung der bereits generierten Zeichenfolge oder einen der Auswahlvorschläge auswählen.

Eine besonders vorteilhafte Ausgestaltung ergibt sich dann, wenn die Auswahlvorschläge zeilenweise alphabetisch angeordnet und die auswählbaren Zeichen in einer Spalte innerhalb der zeilenweise angeordneten Auswahlvorschläge optisch hervorgehoben dargestellt werden. Hierdurch ergibt sich eine besonders vorteilhafte Kombination der beiden Auswahlmöglichkeiten, so dass eine komfortable Eingabemöglichkeit geschaffen wird.

Das Verfahren kann außer bei Navigationssystem auch bei anderen elektronischen Systemen, insbesondere bei Mobiltelefonen, eingesetzt werden.

Weitere vorteilhafte Ausgestaltungen des Verfahrens sind in den Unteransprüchen angegeben.

Die Erfindung wird nachfolgend anhand des Ausführungsbeispiels und der Zeichnung näher erläutert. Es zeigen:
- Fig. 1:: die Komponenten eines Navigationssystems
- Fig. 2:: Bildschirmdarstellungen zur Erläuterung der angezeigten Auswahlmöglichkeiten
- Fig. 3:: ein Ablaufdiagramm des Verfahren.

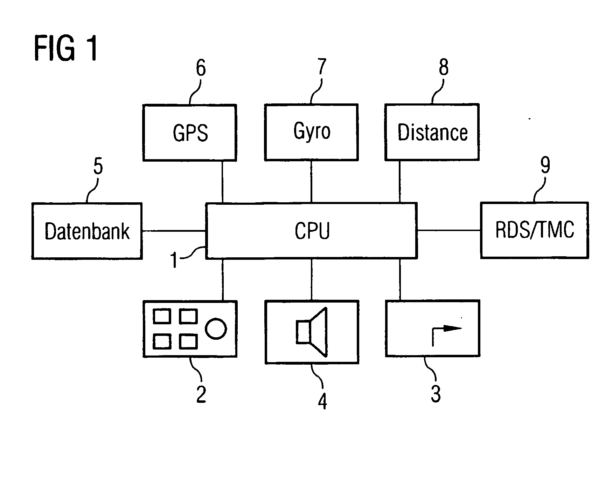

In Fig. 1 sind die Komponenten eines Navigationssystems für Kraftfahrzeuge schematisch dargestellt. Zentraler Bestandteil des Navigationssystems ist die Recheneinheit (CPU) 1, die auch die erforderlichen Arbeitsspeicher enthält. Mit der CPU 1 ist eine Bedieneinheit 2 verbunden, über die beispielsweise der Zielort eingegeben oder ausgewählt werden kann. Die Bedieneinheit 2 enthält dazu unter anderem ein oder mehrere Bedienelemente zur Steuerung eines Cursors. Die Bedieneinheit 2 kann im gleichen Gehäuse wie die CPU 1 untergebracht sein, jedoch kann die Bedieneinheit 2 auch als Fernbedienung ausgebildet sein, die mit der CPU 1 beispielsweise über eine optische Schnittstelle oder eine Funkschnittstelle in Verbindung steht. Insbesondere kann die Bedieneinheit 2 einen Dreh/Drücksteller für die Eingabe des Fahrziels aufweisen. Derartige Dreh-/Drücksteller sind für die Verwendung in Navigationssystemen hinreichend bekannt und finden sich auch in kommerziell erhältlichen Navigationssystemen.

Mit der CPU 1 ist eine optische Anzeigeeinheit 3 verbunden, über die eine Kartendarstellung und Zielführungsinformationen sowie sonstige Informationen ausgegeben werden. Auf der optischen Anzeigeeinheit 3 werden bei der Zieleingabe alphanumerische Zeichen oder Auswahlvorschläge angezeigt. Nach der Durchführung einer Routenberechnung werden die Zielführungsinformationen auch über einen Lautsprecher 4 akustisch ausgegeben.

Die CPU 1 ist ferner mit einer Datenbank 5 verbunden, die die Landkartendaten enthält. Diese Daten sind beispielsweise auf einer CD-ROM oder einer DVD abgespeichert. In diesem Fall enthält das Navigationssystem ein CD-ROM- bzw. DVD-Laufwerk, das mit der CPU 1 verbunden ist. Anhand der Landkartendaten kann von der CPU 1 bei bekanntem Start- und Zielort in bekannter Weise eine Berechnung der optimalen Route durchgeführt werden, die dann über die optische Ausgabeeinheit 3 ausgegeben werden kann.

Die Datenbank 5 kann auch aus mehreren Einzeldatenbanken bestehen, die neben einer auf einer DVD oder CD-ROM abgespeicherten Landkartendatei beispielsweise Datenbanken mit den zuletzt ausgewählten Zielorten oder Daten eines Adressbuches beinhalten.

Zur Bestimmung der aktuellen Fahrzeugposition enthält das Navigationssystem ferner einen Empfänger 6 zum Empfang von Satellitennavigationssignalen. Um eine vom Satelliten unabhängige Positionsbestimmung durchführen zu können, enthält das Navigationssystem weiterhin einen Richtungssensor 7 und einen Wegsensor 8, die ebenfalls mit der CPU 1 verbunden sind, so dass mit Hilfe eines geeigneten Computerprogramms mit diesen Signalen eine Positionsbestimmung möglich ist.

Ferner ist die CPU 1 im dargestellten Beispiel zusätzlich mit einem Rundfunkempfänger 9 verbunden, der zum Empfang von RDS-TMC-Signalen ausgebildet ist. Somit können empfangene Verkehrsinformationen vom Rundfunkempfänger 9 an die CPU 1 weitergeleitet und bei der Routenberechnung berücksichtigt werden. Alternativ können Verkehrsinformationen auch über ein Mobilfunkgerät, insbesondere nach dem GSM- oder UMTS-Standard empfangen und an die Recheneinheit weitergeleitet werden.

Abweichend von dem beschriebenen Navigationssystem können die Landkartendaten auch über das Mobilfunkgerät von einer zentralen Servicestelle in das Fahrzeug übertragen werden. In diesem Falle kann ein Lesegerät für ein Speichermedium mit den Landkartendaten im Fahrzeug entfallen. Entsprechende Navigationssysteme sind bekannt.

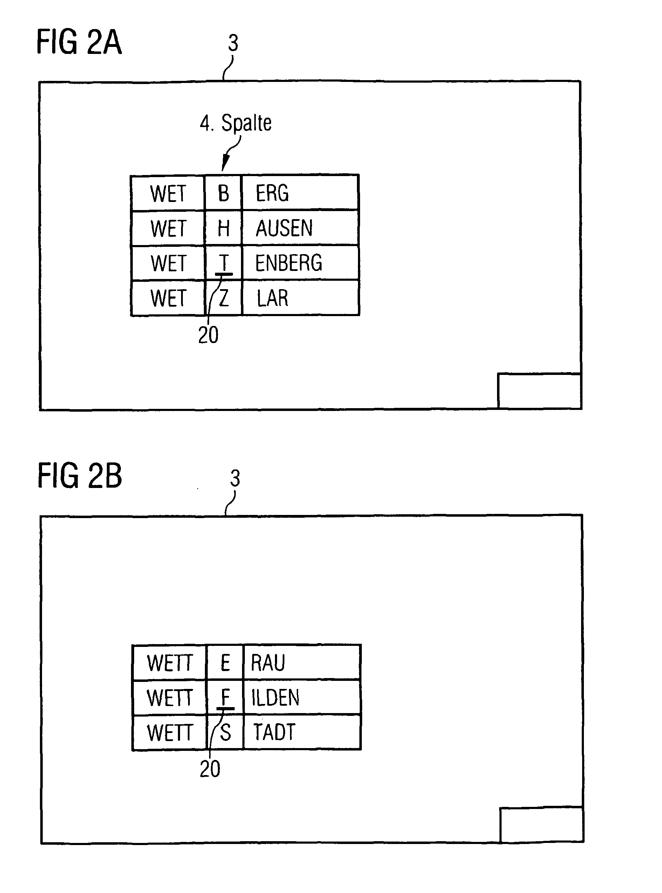

Fig. 2 zeigt Darstellungen der Anzeigeeinheit 3 zur Erläuterung des Verfahrens zur Auswahl einer Ortsbezeichnung. Zur Eingabe einer vollständigen Zieladresse sind i.d.R. mehrere Adresselemente, wie Land, Stadt und Straße, einzugeben oder auszuwählen. Der Benutzer möchte nun einen Stadtnamen als Zielort eingeben und hat hierzu bereits die Buchstaben W, E, T eingegeben. Anhand der Einträge in der Datenbank, wobei es sich um die Datenbank mit allen Ortsnamen der entsprechenden Landkartendatei oder auch um eine der oben genannten spezielleren Datenbanken handeln kann, wird ermittelt, dass in der Datenbank nur solche Städtenamen existieren, die in Ergänzung der Zeichenfolge WET als vierten Buchstaben ein B, H, T oder Z aufweisen. Sind jedoch beispielsweise mehrere Städte vorhanden, die als vierten Buchstaben ein T aufweisen und somit mit WETT beginnen, so wird nur eine dieser Städte als Auswahlvorschlag ausgewählt. Dies kann beispielsweise derart erfolgen, dass diejenige Stadt ausgewählt wird, bei der die größte Wahrscheinlichkeit besteht, dass der Benutzer sie als Fahrziel auswählen möchte. Es kann sich daher um eine Stadt handeln, die bereits früher von dem Benutzer ausgewählt wurde oder auch in einem persönlichen Adressbuch vorhanden ist.

Gleiches gilt für alle anderen Ergänzungsbuchstaben ebenfalls, so dass also zu jedem der Ergänzungsbuchstaben B, H, T oder Z zu der bereits ausgewählten Zeichenfolge WET genau ein Auswahlvorschlag angezeigt wird.

Wie in Fig. 2a gezeigt, werden die Auswahlvorschläge zeilenweise angezeigt, wobei weiterhin jeweils die ersten Buchstaben der Auswahlvorschläge untereinander und somit quasi in einer ersten Spalte stehen. Gleiches gilt für die zweiten, dritten usw. Buchstaben. Wie bereits erwähnt sind bei dem in Fig. 2a dargestellten Beispiel die Buchstaben W, E, T bereits buchstabenweise ausgewählt worden. Die weiteren möglichen Ergänzungszeichen B, H, T, Z befinden sich daher in der vierten Spalte untereinander. Der Benutzer kann nun auf einfache Weise entweder direkt einen der Auswahlvorschläge auswählen, d.h. eine der zeilenweise angegebenen Städte WETBERG, WETHAUSEN, WETTENBERG oder WETZLAR, oder der Benutzer kann einen der in der vierten Spalte angegebenen Buchstaben B, H, T, Z als nächsten Buchstaben zur Ergänzung der Zeichenkette WET auswählen, wenn der gewünschte Zielort nicht als Auswahlvorschlag angezeigt wird. Die möglichen Auswahlzeichen B, H, T, Z sind dazu optisch auf der Anzeigeeinheit hervorgehoben.

Weist die Bedieneinheit 2 einen Dreh-/Drücksteller für diese Auswahl auf, so kann durch Drehen des Dreh-/Drückstellers ein Cursor 20 innerhalb der vierten Spalte bewegt werden, wodurch einer der Buchstaben B, H, T oder Z angewählt wird. Die Bedieneinheit 2 kann hierzu auch Richtungstasten aufweisen.

Durch Bewegen des Cursors 20 nach rechts kann dann der angewählte Buchstabe bestätigt werden. Durch Bewegen des Cursors 20 nach links kann zudem die Auswahl des dritten Buchstabens rückgängig gemacht werden. Durch Drücken eines OK-Buttons, beispielsweise durch Drücken des Dreh-/Drückstellers der Eingabeeinheit 2 kann der komplette Eintrag der aktuellen Zeile bestätigt werden, ohne dass die weitere Buchstabenfolge explizit eingegeben werden muß. Bei dem in Fig. 2a gezeigten Beispiel steht der Cursor 20 in der dritten Zeile innerhalb des Stadtnamens WETTENBERG, so dass durch Drücken des OK-Buttons WETTENBERG als Zielort ausgewählt wird.

Die Eingabe eines vierten Buchstabens ist dann erforderlich, wenn keiner der angezeigten Auswahlvorschläge dem gewünschten Zielort entspricht. Hat der Benutzer beispielsweise als vierten Buchstaben den Buchstaben T ausgewählt, so wird nun geprüft, welche Einträge in der Datenbank vorhanden sind, die als Anfangsbestandteil die Zeichenfolge WETT aufweisen. Aus diesem Vergleich wird festgelegt, welche weiteren Buchstaben in Ergänzung der Zeichenfolge noch infrage kommen. Im Beispiel sind dies die Buchstaben E, F, S, wie in Fig. 2b gezeigt. Wie bereits bei Fig. 2a erläutert, wird nun zu jedem Anfangsbestandteil, hier WETT, ergänzt um einen der Ergänzungsbuchstaben E, F, S eine der möglichen Städte angegeben. Der Benutzer kann nun wiederum einen der angegebenen Auswahlvorschläge direkt annehmen oder einen der weiteren Buchstaben E, F, S als fünften Buchstaben des gewünschten Zielortes auswählen.

Können auf der Anzeigeeinheit 3 nicht alle Auswahlvorschläge und Ergänzungsbuchstaben gleichzeitig angezeigt werden, weil die Anzahl der möglichen Ergänzungsbuchstaben größer ist als die Anzahl der Zeilen der Anzeigeeinheit 3, so kann die Anzeige über die Bedieneinheit 2 gescrollt werden.

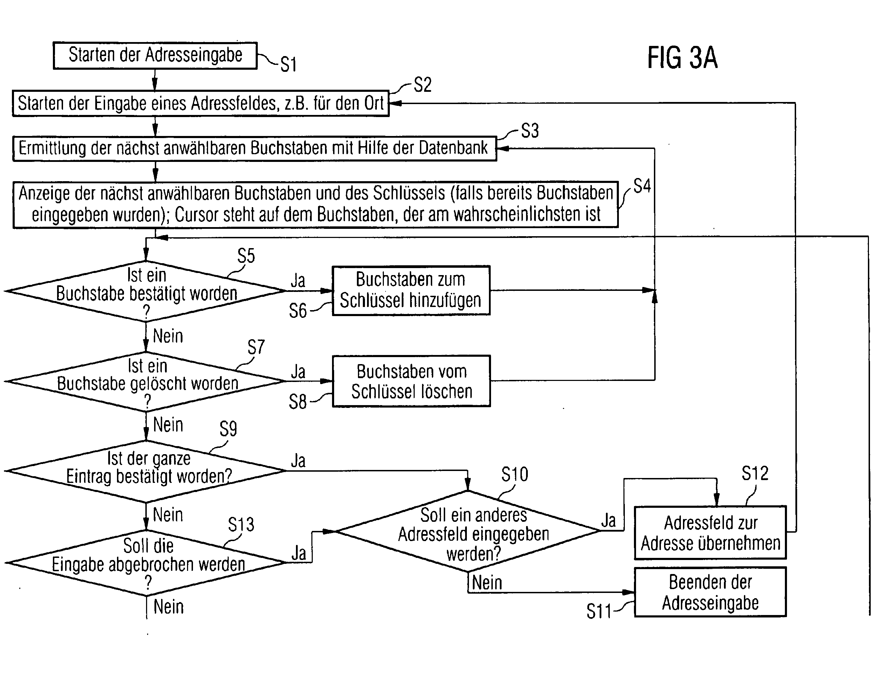

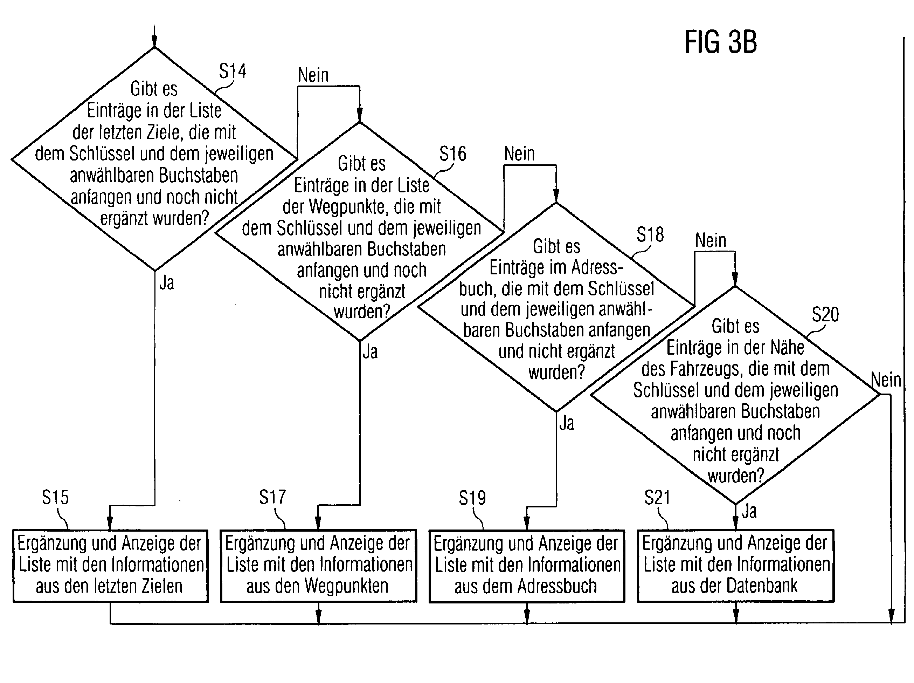

Fig. 3 zeigt ein Ablaufdiagramm des Verfahrens für die Eingabe eines Zielortes. In Schritt S1 wird die Adresseingabe gestartet. Die Adresseingabe setzt sich zusammen aus der Eingabe eines Landes, einer Stadt und einer Straße, wobei das Land aber auch voreingestellt sein kann. Diese drei Bestandteile der Adresse bilden jeweils ein Adressfeld. In Schritt S2 wird die Eingabe eines der Adressfelder gestartet, beispielsweise die Eingabe für die Ortsbezeichnung. In Schritt S3 wird mit Hilfe der Datenbank, beispielsweise der Datenbank der zuletzt eingegebenen Ziele, ermittelt, welche Buchstaben als nächstes noch auswählbar sind, um in Ergänzung zu einer bereits eventuell gewählten Zeichenfolge noch einen sinnvollen Eintrag zu ergeben.

In Schritt S4 werden die noch anwählbaren Buchstaben und die bereits eingegebene Zeichenfolge, die auch als Schlüssel bezeichnet wird, angezeigt. Vorzugsweise steht der Cursor der Anzeigeeinheit hierbei auf dem Buchstaben, der nach vorgegebenen Kriterien am wahrscheinlichsten ist.

In Schritt S5 wird geprüft, ob einer der auswählbaren Buchstaben ausgewählt und bestätigt wurde. Ist dies der Fall, so wird in Schritt S6 der ausgewählte Buchstabe zum Schlüssel hinzugefügt, und das Verfahren wird mit Schritt S3, das heißt der Ermittlung der nächst anwählbaren Buchstaben fortgesetzt. Wird dagegen in Schritt S5 festgestellt, dass kein Buchstabe bestätigt wurde, so wird in Schritt S7 geprüft, ob vom Benutzer ein vorher bereits ausgewählter Buchstabe gelöscht wurde. Ist dies der Fall, wird in Schritt S8 dieser Buchstabe auch vom Schlüssel gelöscht. Wird in Schritt S7 dagegen festgestellt, dass kein Buchstabe gelöscht wurde, so wird in Schritt S9 geprüft, ob vom Benutzer ein kompletter Auswahlvorschlag bestätigt wurde. Ist dies der Fall, so ist die Eingabe dieses Adressfeldes abgeschlossen und es wird in Schritt S10 geprüft, ob ein anderes Adressfeld, beispielsweise ein Straßenname eingegeben werden soll. Ist dies nicht der Fall, so wird in Schritt S11 die Adresseingabe beendet. Wird in Schritt S10 jedoch festgestellt, dass ein weiteres Adressfeld angegeben werden soll, so wird in Schritt S12 das Adressfeld zur Adresse übernommen und das Verfahren anschließend in Schritt S2 mit dem Starten der Eingabe für das weitere Adressfeld fortgesetzt.

Wird in Schritt S9 kein Auswahlvorschlag bestätigt, so wird in Schritt S13 geprüft, ob die Eingabe abgebrochen werden soll. Ist dies der Fall, so wird in Schritt S10 geprüft, ob ein weiteres Adressfeld eingegeben werden soll. Wird in Schritt S13 festgestellt, dass die Eingabe nicht abgebrochen werden soll, so wird in Schritt S14 geprüft, ob es in der aktuell benutzten Datenbank, hier in der Liste der zuletzt eingegebenen Zielorte Einträge gibt, die mit dem Schlüssel und dem jeweiligen anwählbaren Buchstaben beginnen und noch nicht als Auswahlvorschlag auf der Anzeigeeinheit angezeigt wurden. Ist dies der Fall, so wird in Schritt S15 dieser neue Auswahlvorschlag aus der Liste mit den Informationen aus den zuletzt angefahrenen Zielen ergänzt. Wird dagegen in Schritt S14 festgestellt, dass es in der Liste der letzten Ziele keinen weiteren passenden Eintrag gibt, der noch nicht als Auswahlvorschlag angezeigt wurde, so wird in Schritt S16 geprüft, ob es in der Liste der Wegpunkte weitere Einträge gibt, die mit dem Schlüssel und dem jeweiligen anwählbaren Buchstaben beginnen und noch nicht als Auswahlvorschlag angezeigt wurden. Ist dies der Fall, so wird in Schritt S17 analog zum Schritt S15 eine Ergänzung und Anzeige vorgenommen, hier jedoch aus der Liste mit den Informationen aus den Wegpunkten. Wird die Abfrage in Schritt S16 verneint, so wird in Schritt S18 geprüft, ob es in einem Adressbuch Einträge gibt, die mit dem Schlüssel und dem jeweiligen anwählbaren Buchstaben beginnen und nicht angezeigt wurden. Ist dies der Fall, wird in Schritt S19 analog zu den Schritten S15 und S17 eine Ergänzung und Anzeige der Liste vorgenommen, hier mit den Informationen aus dem Adressbuch. Wird die Abfrage in Schritt S18 verneint, so wird in Schritt S20 geprüft, ob es innerhalb eines vorgegebenen Abstandes von der gegenwärtigen Fahrzeugposition Zielorte gibt, die mit dem Schlüssel und dem jeweiligen anwählbaren Buchstaben beginnen und noch nicht als Auswahlvorschläge auf der Anzeigeeinheit angezeigt wurden. Ist dies der Fall, so wird in Schritt S21 wiederum eine Ergänzung und Anzeige der entsprechenden Liste mit Informationen aus der Datenbank vorgenommen. Wird die Abfrage in Schritt 20 verneint, so wird, wie auch im Anschluß an Schritt 15, S17, S19 und S21, das Verfahren mit Schritt S5 fortgesetzt.

Die Erfindung wurde anhand eines Ausführungsbeispiels beschrieben, ohne auf dessen spezielle Ausgestaltung beschränkt zu sein. Abweichungen sind insbesondere hinsichtlich der Komponenten des verwendeten Kraftfahrzeugnavigationssystem möglich.

Mit dem erfindungsgemäßen Verfahren ergibt sich insbesondere der Vorteil, dass die Eingabe einer Adresse schneller erfolgen kann als bei bekannten Verfahren und weniger Interaktionen zwischen dem System und dem Benutzer erforderlich sind.

## Patentansprüche

1. Kraftfahrzeugnavigationssystem mit einer Recheneinheit (1), die mit einer Eingabeeinheit (2) und einer Anzeigeeinheit (3) sowie einem Speicherelement, das eine Datenbank (5) mit Orts - und/oder Straßenbezeichnungen enthält, verbunden ist, wobei die Anzeigeeinheit (3) so angeordnet ist, dass auf ihr sowohl Zeichen zur zeichenweisen Eingabe einer Orts- oder Straßenbezeichnung als auch Auswahlvorschläge für eine Orts- oder Straßenbezeichnung angezeigt werden und die Auswahlvorschläge eine bereits zeichenweise eingegebene Zeichenfolge als Anfangsbestandteil enthalten, **dadurch gekennzeichnet, dass** das Kraftfahrzeugnavigationssystem so angeordnet ist, dass die angezeigten Auswahlvorschläge derart aus den Orts- und/oder Straßenbezeichnungen der Datenbank ausgewählt sind, dass zu jedem Ergänzungszeichen zu der bereits ausgewählten Zeichenfolge genau ein Auswahlvorschlag ausgewählt wird, auch wenn mehrere Orts- und/oder Straßenbezeichnungen vorhanden sind, die das gleiche Ergänzungszeichen aufweisen, so dass sich die Auswahlvorschläge in diesem Ergänzungszeichen unterscheiden.

2. Kraftfahrzeugnavigationssystem nach Anspruch 1, **dadurch gekennzeichnet, dass** wahlweise ein Zeichen oder einer der Auswahlvorschläge auswählbar ist.

3. Kraftfahrzeugnavigationssystem nach einem der vorhergehenden Ansprüche, **dadurch gekennzeichnet, dass** die auswählbaren Zeichen auf der Anzeigeeinheit (3) hervorgehoben angezeigt werden.

4. Kraftfahrzeugnavigationssystem nach einem der vorhergehenden Ansprüche, **dadurch gekennzeichnet, dass** die Auswahlvorschläge zeilenweise alphabetisch angeordnet sind und die auswählbaren Zeichen in einer Spalte innerhalb der zeilenweise angeordneten Auswahlvorschläge optisch hervorgehoben dargestellt sind.

5. Kraftfahrzeugnavigationssystem nach einem der vorhergehenden Ansprüche, **dadurch gekennzeichnet, dass** die Darstellung der Auswahlvorschläge scrollbar ist.

6. Kraftfahrzeugnavigationssystem nach einem der vorhergehenden Ansprüche, **dadurch gekennzeichnet, dass** mehrere Datenbanken mit Bezeichnungen vorhanden sind und hinsichtlich der Auswahl der Bezeichnungen eine Hierarchie der Datenbanken festgelegt ist.

7. Verfahren zur Auswahl einer Bezeichnung aus einer Vielzahl von in einer ersten Datenbank gespeicherten Bezeichnungen durch
- Anzeigen eines Satzes von alphanumerischen Zeichen auf einer Anzeigeeinheit (3),
- Auswahl eines Zeichens als Bestandteil einer zu generierenden Zeichenfolge,
- Vergleichen des ausgewählten Zeichens oder der generierten Zeichenfolge mit den in der ersten Datenbank gespeicherten Bezeichnungen, um einen neuen Satz von Zeichen festzulegen, wobei der neue Satz von Zeichen nur diejenigen Zeichen enthält, die in Ergänzung des ausgewählten Zeichens oder der generierten Zeichenfolge eine neue Zeichenfolge ergeben, die Anfangsbestandteil mindestens einer der auf der ersten Datenbank abgespeicherten Bezeichnungen ist,
- Anzeigen zumindest eines Teils der Zeichen des neuen Satzes von Zeichen auf der Anzeigeeinheit (3) zur Auswahl,
- Auswählen von Bezeichnungen aus der ersten oder einer weiteren Datenbank als Auswahlvorschläge, wobei zu jeder möglichen neuen Zeichenfolge genau ein Auswahlvorschlag ausgewählt wird, der die jeweilige neue Zeichenfolge enthält, auch wenn mehrere der in der ersten Datenbank gespeicherten Bezeichnungen vorhanden sind, die die neue Zeichenfolge erhalten und
- Anzeige zumindest einiger der Auswahlvorschläge auf der Anzeigeeinheit (3) zur Auswahl,
wobei wahlweise ein Zeichen des neuen Satzes von Zeichen oder
einer der Auswahlvorschläge auswählbar ist.

8. Verfahren nach Anspruch 7, **dadurch gekennzeichnet, dass** die Auswahlvorschläge zeilenweise auf der Anzeigeeinheit (3) dargestellt werden.

9. Verfahren nach einem der Ansprüche7 oder 8, **dadurch gekennzeichnet, dass** die auswählbaren Zeichen auf der Anzeigeeinheit (3) hervorgehoben angezeigt werden.

10. Verfahren nach Anspruch 8 und 9, **dadurch gekennzeichnet,**
**dass** die Auswahlvorschläge zeilenweise alphabetisch angeordnet und die auswählbaren Zeichen in einer Spalte innerhalb der zeilenweise angeordneten Auswahlvorschläge optisch hervorgehoben dargestellt werden.

11. Verfahren nach einem der Ansprüche 7 bis 10 , **dadurch gekennzeichnet, dass** die Darstellung der Auswahlvorschläge scrollbar ist.

12. Verfahren nach einem der Ansprüche 7 bis 11 , **dadurch gekennzeichnet, dass** mehrere Datenbanken mit Bezeichnungen vorhanden sind und hinsichtlich der Auswahl der Bezeichnungen eine Hierarchie der Datenbanken festgelegt ist.

13. Verfahren nach Anspruch 12, **dadurch gekennzeichnet, dass** eine zweite Datenbank eine Untermenge der Bezeichnungen der ersten Datenbank enthält, und dass Auswahlvorschläge vorrangig aus der zweiten Datenbank entnommen werden.

14. Verfahren nach einem der Ansprüche 7 bis 13, **dadurch gekennzeichnet, dass** es in einem Navigationssystem für Kraftfahrzeuge zur Zielauswahl eingesetzt wird und die Bezeichnungen Orts- oder Straßennamen sind.

15. Verfahren nach Anspruch 14, **dadurch gekennzeichnet, dass** die erste Datenbank ein Orts- oder Straßennamenverzeichnis einer Landkartendatei ist.

16. Verfahren nach Anspruch 14 oder 15, wenn dieser von Anspruch 13 abhängig ist, **dadurch gekennzeichnet, dass** die zweite Datenbank n Einträge enthält, bei denen es sich um die n letzten Zieleingaben handelt.

17. Verfahren nach Anspruch 13, **dadurch gekennzeichnet, dass** die zweite Datenbank ein persönliches Adressbuch ist.

## Claims

1. Motor vehicle navigation system having a computation unit (1) which is connected to an input unit (2) and a display unit (3) and also to a memory element which contains a database (5) with place and/or road names, wherein the display unit (3) is arranged such that it is used to display both characters for the character-by-character input of a place or road name and selection proposals for a place or road name, and the selection proposals contain a character string that has already been input on a character-by-character basis as an initial part, **characterized in that** the motor vehicle navigation system is arranged such that the displayed selection proposals are selected from the place and/or road names in the database such that each complementary character for the already selected character string has precisely one selection proposal selected for it, even when there are a plurality of place and/or road names which have the same complementary character, as a result of which the selection proposals differ in this complementary character.

2. Motor vehicle navigation system according to Claim 1, **characterized in that** either a character or one of the selection proposals can be selected.

3. Motor vehicle navigation system according to either of the preceding claims, **characterized in that** the selectable characters are displayed in highlight on the display unit (3).

4. Motor vehicle navigation system according to one of the preceding claims, **characterized in that** the selection proposals are arranged alphabetically on a row-by-row basis and the selectable characters are presented in visual highlight in a column within the selection proposals arranged on a row-by-row basis.

5. Motor vehicle navigation system according to one of the preceding claims, **characterized in that** the presentation of the selection proposals is scrollable.

6. Motor vehicle navigation system according to one of the preceding claims, **characterized in that** there are a plurality of databases with names, and a hierarchy of the databases is stipulated for the selection of the names.

7. Method for selecting a name from a multiplicity of names stored in a first database by
- displaying a set of alphanumeric characters on a display unit (3),
- selecting a character as part of a character string that is to be generated,
- comparing the selected character or the generated character string with the names stored in the first database in order to stipulate a new set of characters, wherein the new set of characters contains only those characters which, as a complement to the selected character or the generated character string, yield a new character string which is the initial part of at least one of the names stored on the first database,
- displaying at least a portion of the characters from the new set of characters on the display unit (3) for selection,
- selecting names from the first or a further database as selection proposals, wherein each possible new character string has precisely one selection proposal selected for it which contains the respective new character string, even when there are a plurality of the names that are stored in the first database which are provided with the new character string, and
- displaying at least some of the selection proposals on the display unit (3) for selection,
wherein either a character from the new set of characters or one of the selection proposals can be selected.

8. Method according to Claim 7, **characterized in that** the selection proposals are presented on the display unit (3) on a row-by-row basis.

9. Method according to either of Claims 7 or 8, **characterized in that** the selectable characters are displayed in highlight on the display unit (3).

10. Method according to Claims 8 and 9, **characterized in that** the selection proposals are arranged alphabetically on a row-by-row basis and the selectable characters are presented in visual highlight in a column within the selection proposals arranged on a row-by-row basis.

11. Method according to one of Claims 7 to 10, **characterized in that** the presentation of the selection proposals is scrollable.

12. Method according to one of Claims 7 to 11, **characterized in that** there are a plurality of databases with names, and a hierarchy of the databases is stipulated for the selection of the names.

13. Method according to Claim 12, **characterized in that** a second database contains a subset of the names in the first database, and **in that** selection proposals are taken primarily from the second database.

14. Method according to one of Claims 7 to 13, **characterized in that** it is used in a navigation system for motor vehicles for destination selection, and the names are place or road names.

15. Method according to Claim 14, **characterized in that** the first database is a place or road name directory for a map file.

16. Method according to Claim 14 or 15, when said claim is dependent on Claim 13, **characterized in that** the second database contains n entries which are the last n destination inputs.

17. Method according to Claim 13, **characterized in that** the second database is a personal address book.

## Revendications

1. Système de navigation pour véhicule automobile, comprenant une unité (1) d'ordinateur, qui est reliée à une unité (2) d'entrée et à une unité (3) d'affichage ainsi qu'à un élément de mémoire, qui contient une base (5) de données ayant des désignations de lieu et/ou de rue, l'unité (3) d'affichage étant telle qu'il y est affiché à la fois des signes, pour l'entrée signe par signe d'une désignation de lieu ou de rue, et des propositions de sélection d'une désignation de lieu ou de rue et les propositions de sélection contiennent comme élément constitutif de début une suite de signes déjà entrée signe par signe, **caractérisé en ce que** le système de navigation pour véhicule automobile est tel que les propositions de sélection affichées sont sélectionnées dans les désignations de lieu et/ou de rue de la base de données, **en ce que**, pour chaque signe de complément de la suite de signes déjà sélectionnée, est sélectionnée précisément une proposition de sélection, même s'il y a plusieurs désignations de lieu et/ou de rue qui ont le même signe de complément, de sorte que les propositions de sélection se distinguent par ce signe de complément.

2. Système de navigation pour véhicule automobile suivant la revendication 1, **caractérisé en ce qu'**un signe ou l'une des propositions de sélection peut être sélectionné au choix.

3. Système de navigation pour véhicule automobile suivant l'une des revendications précédentes, **caractérisé en ce que** les signes qui peuvent être sélectionnés sont affichés de manière accentuée sur l'unité (3) d'affichage.

4. Système de navigation pour véhicule automobile suivant l'une des revendications précédentes, **caractérisé en ce que** les propositions de sélection sont disposées alphabétiquement ligne par ligne et les signes qui peuvent être sélectionnés sont représentés de manière accentuée visuellement dans une colonne à l'intérieur des propositions de sélection disposées ligne par ligne.

5. Système de navigation pour véhicule automobile suivant l'une des revendications précédentes, **caractérisé en ce que** la représentation des propositions de sélection peut défiler.

6. Système de navigation pour véhicule automobile suivant l'une des revendications précédentes, **caractérisé en ce qu'**il y a plusieurs bases de données ayant des désignations et une hiérarchie des bases de données en ce qui concerne la sélection des désignations est fixée.

7. Procédé de sélection d'une désignation dans une pluralité de désignations mémorisées dans une première base de données par
- affichage d'un jeu de signes alphanumériques sur une unité (3) d'affichage,
- sélection d'un signe comme élément constitutif d'une suite de signes à produire,
- comparaison du signe sélectionné ou de la suite de signes produite aux désignations mémorisées dans la première base de données pour fixer un nouveau jeu de signes, le nouveau jeu de signes ne contenant que les signes qui, en complément du signe sélectionné ou de la suite de signes produite, donnent une nouvelle suite de signes, qui est un élément constitutif de début d'au moins l'une des désignations mémorisées dans la première base de données,
- affichage d'au moins une partie des signes du nouveau jeu de signes sur l'unité (3) d'affichage pour la sélection,
- sélection de signes dans la première ou dans une autre base de données comme propositions de sélection dans lequel, à chaque nouvelle suite de signes possibles, est sélectionnée exactement une proposition de sélection qui contient la nouvelle suite de signes respective, même s'il y a plusieurs des signes mémorisés dans la première base de données, qui contiennent la nouvelle suite de signes et
- affichage d'au moins certaines des propositions de sélection sur l'unité (3) d'affichage pour la sélection, dans lequel au choix un signe du nouveau jeu de signes ou l'une des propositions de sélection peut être sélectionné.

8. Procédé suivant la revendication 7, **caractérisé en ce que** les propositions de sélection sont représentées ligne par ligne sur l'unité (3) d'affichage.

9. Procédé suivant l'une des revendications 7 ou 8, **caractérisé en ce que** les signes pouvant être sélectionnés sont affichés de manière accentuée sur l'unité (3) d'affichage.

10. Procédé suivant l'une des revendications 8 et 9, **caractérisé en ce que** les propositions de sélection sont disposées alphabétiquement ligne par ligne et les signes qui peuvent être sélectionnés sont représentés de manière accentuée visuellement dans une colonne à l'intérieur des propositions de sélection disposées ligne par ligne.

11. Procédé suivant l'une des revendications 7 à 10, **caractérisé en ce que** la représentation des propositions de sélection peut défiler.

12. Procédé suivant l'une des revendications 7 à 11, **caractérisé en ce qu'**il y a plusieurs bases de données ayant des désignations et une hiérarchie des bases de données en ce qui concerne la sélection des désignations est fixée.

13. Procédé suivant la revendication 12, **caractérisé en ce qu'**une deuxième base de données contient un sous-ensemble des désignations de la première base de données et **en ce que** des propositions de sélection sont prélevées prioritairement de la deuxième base de données.

14. Procédé suivant l'une des revendications 7 à 13, **caractérisé en ce qu'**il est utilisé dans un système de navigation pour des véhicules automobiles pour la sélection d'une destination et les désignations sont des noms de lieu ou des noms de rue.

15. Procédé suivant la revendication 14, **caractérisé en ce que** la première base de données est une liste de noms de lieu ou de noms de rue d'un fichier de carte géographique.

16. Procédé suivant la revendication 14 ou 15 lorsque celle-ci dépend de la revendication 13, **caractérisé en ce que** la deuxième base de données contient n entrées, qui sont les n dernières entrées de destination.

17. Procédé suivant la revendication 13, **caractérisé en ce que** le deuxième base de données est un livre d'adresses personnel.
